# EUROPEAN PATENT SPECIFICATION

(11) **EP 2 533 098 B1**
(45) Date of publication and mention of the grant of the patent: **13.11.2013**
(21) Application number: 12168388.2
(22) Date of filing: 16.05.2012
(51) Int. Cl.: G02F 1/167, G09G 3/34

(54) **Electrophoretic display and electronic device**
Elektrophoretische Anzeige und elektronische Vorrichtung
Affichage électrophorétique et dispositif électronique

(30) Priority: 07.06.2011 JP 2011127022
(43) Date of publication of application: 12.12.2012
(73) Proprietor: Seiko Epson Corporation, Shinjuku-ku Tokyo (JP)
(72) Inventor: Komatsu, Harunobu, Suwa-shi, Nagano 392-8502 (JP); Koyama, Tomoko, Suwa-shi, Nagano 392-8502 (JP)
(74) Representative: Miller Sturt Kenyon

(56) References cited:
- US-A1- 2007 268 245
- US-A1- 2011 025 681
- US-A1- 2012 113 499

## Description

The present invention relates to an electrophoretic display and an electronic device with the same.

A technology sealing an electrophoretic dispersion liquid where an electrophoretic particle is dispersed in a dispersing medium between a pair of substrates is known as the related art of an electrophoretic display (EPD). For example, JP-A-2010-91908 discloses an electrophoretic display for dispersing a white electrophoretic particle (referred to as "white particle" hereinafter) and a black electrophoretic particle (referred to as "black particle" hereinafter) charged with different polarities in a dispersing medium when a voltage is applied between a pixel electrode provided on one substrate and an opposite electrode provided on another substrate.

According to the electrophoretic display, a voltage may be applied between the pixel electrode and the opposite electrode to move the white particle and the black particle to different substrates, respectively, and display them on a display surface.

Further, disclosed is an electrophoretic display including a first display electrode in which a black particle is dispersed in a dispersing medium and provided along a lower step surface of a step portion formed for each pixel on one substrate and a second display electrode provided along an upper step surface of the step portion, a region on which the first display electrode is formed is colored in black, and a region on which the second display electrode is colored in white (refer to JP-A-2003-5226 and JP-A-2003-5225).

According to the electrophoretic display, a voltage is applied between the first display electrode and the second display electrode to move a black particle to cover the first display electrode or the second display electrode, and each pixel may be displayed in black or white. In addition, in the electrophoretic display, a partition member is provided to surround each pixel so as to prevent movement of an electrophoretic particle between pixels.

According to the electrophoretic display disclosed in JP-A-2010-91908, for example, when white is displayed on a display surface, a black particle may not be sufficiently covered by a white particle layer corresponding to a small thickness of the white particle layer formed by a plurality of white particles moved to an opposite electrode side, and a reflection rate of white may be deteriorated. Accordingly, in order to perform high-quality display, a white particle layer when displaying white on a display surface needs to have a thickness enough to cover a black particle moved to a pixel electrode side. For this reason, it is difficult to make a distance between an opposite electrode and a pixel electrode (in other words, the distance between a pair of substrates) short, and there is a technical problem in that a relatively high voltage should be applied between an opposite electrode and a pixel electrode.

In order to increase a thickness of a white particle layer when displaying white on the display surface, if increasing the number of white particles, the particle concentration of an electrophoretic dispersion liquid is increased. Accordingly, there is a technical problem in that the moving speed of an electrophoretic particle may be reduced when a voltage is applied.

In each electrophoretic display disclosed in JP-A-2003-5226 and JP-A-2003-5225, since a voltage is applied between a first display electrode arranged along a lower step surface of a concave bottom surface of a step portion and a second display electrode arranged along an upper step surface of the step portion, a direction of an electric field becomes a direction passing through an inside of the step portion but does not accord with an electrophoretic direction of a particle, and thus, electrophoretic speed of an electrophoretic particle may be reduced. That is, there is a possibility that display switch speed becomes low.

Furthermore, since a partition member is disposed to surround each pixel, there is a technical problem that a valid display region capable of validly performing display is reduced corresponding to a region in which the partition member is disposed, so that there may be a difficulty in realizing a high quality display.

US 2007/268245 discloses an image display device for color display including a unit cell filled with electrophoresis ink, the ink including two kinds of particles different in chargeability and color being dispersed in transmissive solvent. Voltage is applied to an opposite electrode, a stacked lower electrode and an upper electrode and thereby electrically charged particles and charged particles are moved to a first opening and a second opening where an insulating layer is provided on the lower electrode and the upper electrode. Thus the assemblage and diffusion state of two kinds of particles are controlled. Thereby, the unit cell obtains four display colors. The lower electrode can be made to be a reflecting layer covering the entire unit cell.

US 2011/025681 discloses an electrophoretic display including a plurality of spatially divided cells and plural types of color substances contained in each of the cells, wherein a display color is controlled by controlling electrophoresis of the colored substances within the cells. Each of a first cell, a second cell and a third cell included in the plurality of cells includes a first color substance corresponding to a mutually differing one of three primary colors in additive color mixing or subtractive color mixing and a second color substance in a relationship of complementary colors with the first color substance. The first cell is controlled to be in a display state by the first color substance, and the second and third cells are controlled to be in a display state by the second color substance, respectively.

US 2012/113499 discloses an electrophoretic display including a first substrate and a second substrate, base portions which are provided in a display area on the first substrate such that any two mutually adjacent ones of the base portions are disposed so as to have an interspace therebetween, and reflection plates which are provided on upper surfaces of the base portions, respectively. The display also includes first electrodes which are overlapped with the reflection plates, respectively, second electrodes which are provided in the interspaces on the first substrate so as to correspond to the first electrodes, respectively, and a sealing member which is provided between the first and second substrates so as to enclose the display area. The display has dispersion liquid provided between the first and second substrates, which includes a dispersion medium and electrophoretic particles dispersed in the dispersion medium, the electrophoretic particles having a color different from the reflection plate.

According to an aspect of the present invention, there is provided an electrophoretic display as defined in claim 1.

Suitably, a dispersion liquid in which black electrophoretic particles are dispersed in a dispersing medium is disposed between the first and second substrates. The electrophoretic particles are dispersed in the dispersing medium in a positively or negatively charged state. Further suitably, a base portion is provided on the first substrate. For example, a reflection plate with white is provided on a surface of the base portion on a second substrate side. Suitably in addition, a first electrode is provided in a bottom surface of the first concave portion of the base portion, a second electrode is provided in a bottom of a second concave portion having a shallower depth than that of the first concave portion, and a third electrode is provided on a second substrate facing to the first and second electrodes with the dispersion liquid therebetween.

Suitably, a voltage corresponding to an image signal may be applied between the first and second electrodes and the third electrode, thereby performing high-quality display on a display region.

Suitably, a voltage is applied between the first and the second electrodes and the third electrode such that, for example, the black electrophoretic particles are moved to the third electrode side, thereby covering an inner side of the second substrate. Accordingly, a color (e.g., black) of the electrophoretic particles may be displayed for each third electrode (in other words, for each pixel) on a display region. Further, a voltage may be applied between the first and second electrodes and the third electrode such that for example, black electrophoretic particles are moved to the first and second electrode sides, thereby receiving, for example, the black electrophoretic particles in respective apertures formed by the first concave portion and the second concave portion provided on the base portion and exposing, for example, a reflection plate with white. Accordingly, a color (e.g. white) of the reflection plate may be displayed on a display region.

Suitably, since only one type of electrophoretic particle (namely, electrophoretic particles of black type) is dispersed in a dispersion liquid, a concentration of electrophoretic particles in the dispersing liquid may be reduced to increase moving speed (in other words, response speed of the electrophoretic particles for the applied voltage) of the electrophoretic particles in the dispersion liquid in comparison with a case where both black particles and white particles are dispersed in the dispersion liquid. As a result, display speed switching display may be increased.

Conveniently, a reflection plate is configured to be, for example, white, and white may be surely displayed on a display region. Here, if the electrophoretic particles are captured around the first and second electrodes, since the white reflection plate may scatter light in a plurality of directions, it is not actually adversely influenced (e.g., brightness is not adversely influenced and there is no substantial deterioration in contrast) by display of a color (namely, black) of an electrophoretic particle in most cases.

As illustrated above, in the electrophoretic display of this aspect, high-quality display may be performed. Furthermore, a voltage may be applied between the first and second electrodes and the third electrode by a simpler configuration of an electric wire.

Preferably, the first electrode includes a side surface portion extending to the second substrate side along a side surface of the first concave portion.

According to this, since an area of the first electrode may be increased, the electrophoretic particle can be certainly captured near the first electrode to perform high quality display.

Preferably, the first concave portion is provided on the base portion to surround the second concave portion to be spaced in a planar fashion.

According to this, since a first electrode provided in a bottom surface of the first concave portion surrounds the second electrode, when the electrophoretic particle is moved from the first and second electrodes to the third electrode or from the third electrode to the first and second electrodes, electrophoresis may be readily performed. Further, since the first concave portion is arranged to surround the second concave portion having a shallower depth, for example, when the second concave portion is located almost at the center of the pixel, the electrophoretic particle may be rapidly received in the second concave portion in a center region of the pixel. That is, display speed on an outer appearance may be increased.

Preferably, the second concave portion is provided on the base portion to surround the first concave portion to be spaced in a planar fashion.

According to this, since a second electrode provided in a bottom surface of the second concave portion surrounds the first electrode, when the electrophoretic particle is moved from the first and second electrodes to the third electrode or from the third electrode to the first and second electrodes, electrophoresis may be readily performed. Further, since the second concave portion having a shallower depth is arranged to surround the first concave portion, for example, when the first concave portion is located at almost the center of the pixel, the electrophoretic particle may be rapidly received in the second concave portion in a peripheral side of the pixel. That is, display speed on an outer appearance may be increased.

Preferably, the first concave portion and the second concave portion are provided on the base portion to be spaced by a constant distance in a planar fashion.

According to this, an electrophoretic particle dispersed in a dispersion liquid may be evenly received in the first concave and the second concave portion. Furthermore, the electrophoretic particle received in the first concave portion and the second concave portion may be evenly discharged to the dispersion liquid. That is, the occurrence of display irregularities according to uneven locution of the electrophoretic particle may be reduced.

Preferably, a total volume of the electrophoretic particle in the dispersion liquid is shallower than that of an aperture between the first concave portion and the second concave portion provided on the base portion.

According to this, a voltage is applied between the first and second electrodes and the third electrode such that the electrophoretic particle is moved to the first and second electrode sides. Accordingly, the electrophoretic particle may be certainly received in an aperture between the first and second concave portions in which the electrodes are provided.

Preferably, the electrophoretic display includes a partition compartmenting an electrophoretic layer including the dispersion liquid filled between the first substrate and the second substrate into a plurality of regions, wherein one or more of the first electrode and the second electrode are provided corresponding to the plurality of regions, respectively.

According to this, since a partition is provided between the first and second substrates, for example, strength against pressure applied from the first substrate side or the second substrate side may be increased. Here, in particular, a plurality of first and second electrodes are included in each of a plurality of regions compartmented by the partition. Accordingly, since a region on a display region compartmented by the partition (in other words, a region not contributing to display) is shallower in comparison with, for example, a case where a partition is provided to surround each pixel, bright display with high contrast may be performed.

An electronic device according to the invention includes an electrophoretic display as described above.

Since the electrophoretic display of the invention is provided, various electronic devices such as a watch, an electronic paper, an electronic notebook, a portable phone, or a portable audio device capable of performing high quality display may be implemented.

Embodiments of the invention will now be described by way of example only with reference to the accompanying drawings, wherein like numbers reference like elements.

Fig. 1 is a schematic plan view illustrating an overall configuration of an electrophoretic display according to a first embodiment.

Fig. 2 is a schematic cross sectional view illustrating a structure of an electrophoretic display taken along line II-II of Fig. 1.

Fig. 3 is a schematic plan view illustrating arrangement of each configuration in a pixel of an Example 1.

Fig. 4 is a schematic perspective view illustrating a configuration of a base portion of an Example 1.

Fig. 5 is a schematic plan view illustrating arrangement of each configuration in a pixel of an Example 2.

Fig. 6 is a schematic plan view illustrating arrangement of each configuration in a pixel of an Example 3.

Fig. 7 is a block diagram illustrating an electric configuration of an electrophoretic display according to a first embodiment.

Fig. 8 is a view illustrating a display principle of an electrophoretic display according to a first embodiment (first example thereof).

Fig. 9 is a view illustrating a display principle of an electrophoretic display according to a first embodiment (second example thereof).

Fig. 10 is a schematic cross-sectional view illustrating a configuration of a pixel in an electrophoretic display according to a second embodiment.

Fig. 11 is a schematic cross-sectional view illustrating a configuration of a pixel in an electrophoretic display according to a third embodiment.

Fig. 12 is a perspective view illustrating a configuration of an electronic paper being an example of an electronic device to which an electrophoretic display is applied.

Fig. 13 is a perspective view illustrating a configuration of an electronic notebook being an example of an electronic device to which an electrophoretic display is applied.

Hereinafter embodiments of the present invention will be described with reference to the accompanying drawings, wherein like numbers reference like elements. Here, in each of the following drawings, the dimensions of each layer or each part may be made different to those in practice in order to make each layer or each part a recognizable size.

### First embodiment

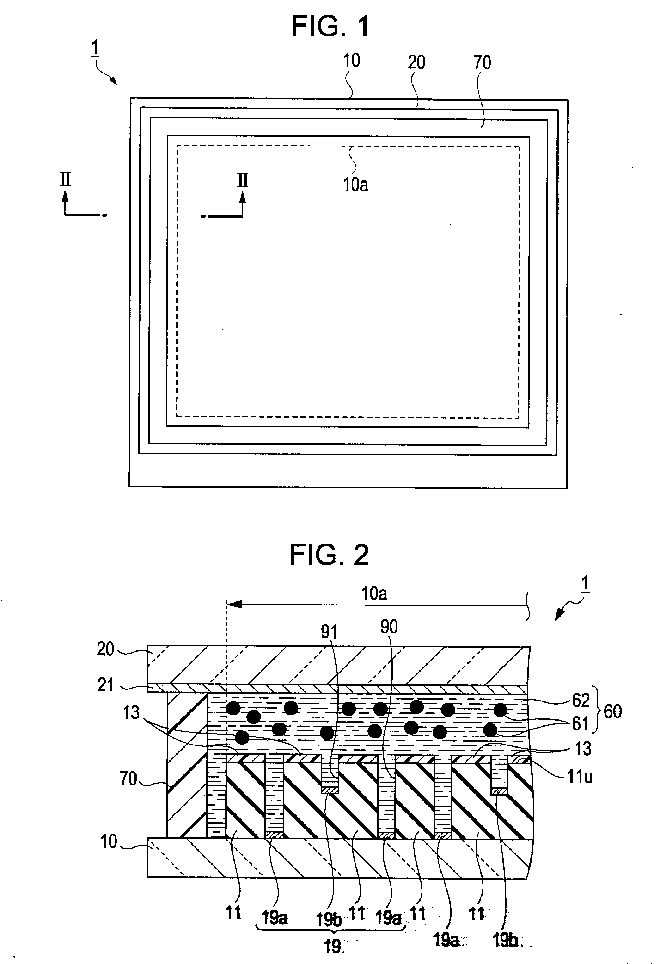

An electrophoretic display according to a first embodiment will be described with reference to Fig. 1 to Fig. 9.

First, an overall configuration of an electrophoretic display according to this embodiment will be described with reference to Fig. 1 and Fig. 2.

Fig. 1 is a schematic plan view illustrating an overall configuration of an electrophoretic display according to a first embodiment. Fig. 2 is a schematic cross sectional view illustrating a structure of an electrophoretic display taken along line 11-11 of Fig. 1.

In Fig. 1 and Fig. 2, an electrophoretic display 1 according to this embodiment includes a circuit board 10 and an opposite substrate 20 as substrates disposed to be facing each other, a dispersing liquid (EP layer) 60 (refer to Fig. 2) provided on a display region 10a between the circuit board 10 and the opposite substrate 20, and a sealing member 70 provided to surround the display region 10a between the circuit board 10 and the opposite substrate 20. Further, the circuit board 10 is an example of a first substrate according to an aspect of the invention, and the opposite substrate 20 is an example of a second substrate according an aspect of the invention.

The circuit board 10 is a substrate in which various circuit elements for driving a first electrode 19a and a second electrode 19b (refer to Fig. 2) to be described later are made on a flat substrate such as a resin substrate or a glass substrate.

The opposite substrate 20 is a substrate in which a transparent opposite electrode 21 (refer to Fig. 2) is disposed on a flat substrate such as a resin substrate or a glass substrate. The opposite electrode 21 is an example of a third electrode according to the aspect of the invention, and may use a transparent electrode transmitting a beam of a visible wavelength band such that the dispersing liquid 60 may be recognized.

Materials having substantial conductivity are sufficient as materials of the transparent electrode. As non-limited examples, there are copper, aluminum, or metal materials such as alloys including the same, carbon materials such as carbon black, polyacetylene, polypyrrole, electronically conductive high-polymer material such as a derivative thereof, ion conductive polymer materials dispersing ionic materials such as NaCl, LiClO₄, KCl, LiBr, LiNo₃, LiSCN among matrix resins such as polyvinyl alcohol, polycarbonate, polyethylene oxide, and various conductive materials including conductive oxide materials such as Indium-tin oxide (ITO), fluorine-doped tin-oxide (FTO), tin oxide (SnO₂), and indium oxide (IO) One kind or a combination of two kinds or more may be used. As non-limited examples of the transparent substrate and the transparent electrode, PET/ITO sheet (NXC1) made by Toray Industries, Inc. may be used.

As illustrated in Fig. 2, the dispersion liquid 60 is an electrophoretic dispersion liquid in which a plurality of black particles 61 are dispersed in a dispersing medium 62, which is called an electrophoretic layer.

The black particles 61 are black electrophoretic particles as an example of an electrophoretic particle according to the aspect of the invention. For example, the black particles 61 include a black pigment such as aniline black or carbon black. For example, the black particles 61 are dispersed in the dispersing medium 62 in a normally discharged state. For example, the size of the black particles 61 is 250 nm to 500 nm.

The dispersing medium 62 is a medium dispersing the black particles 61. As an example of the dispersing medium 62, water; alcohol solvent such as methanol, ethanol, isopropanol, butanol, octanol, methylcellosolve; various esters such as ethyl acetate or butyl acetate; ketones such as acetone, methyl ethyl ketone, methyl isobutyl ketone; aliphatic hydrocarbon such as pentane, hexane, or octane; alicyclic hydrocarbon such as cyclohexane or methyl cyclohexane; aromatic hydrocarbon such as benzene, toluene, or benzenes having long-chain alkyl group such as xylene, hexyl benzene, heptyl benzene, octyl benzene, nonyl benzene, decyl benzene, undecyl benzene, dodecyl benzene, tridecyl benzene, tetradecyl benzene; halogenated hydrocarbon such as methylene chloride, chloroform, carbon tetrachloride, or 1, 2- dichloroethane; carboxylic salt; and other oils may be used individually or mixedly. Further, a surface acting agent may be combined with the dispersing medium.

The sealing member 70 is made from, for example, an epoxy resin, a silicon resin, or an acryl resin. As shown in Fig. 1, the sealing member 70 is provided between the circuit board 10 and the opposite substrate 20 to surround a display region 10a. The sealing member 70 has a function of sealing between the circuit board 10 and the opposite substrate 20 to prevent the dispersion liquid 60 from being leaked between the circuit board 10 and the opposite substrate 20. Further, the sealing member 70 has a function of suppressing water to be infiltrated into a dispersion liquid 60 from an exterior. Moreover, the sealing member 70 has a function of sticking the circuit board 10 and the opposite substrate 20 with each other. In addition, inorganic particulate such as silica or alumina may be dispersed among resins constituting the sealing member 70. In this case, it may suppress the water to be infiltrated in the dispersion liquid 60 through a sealing member 70 from an exterior.

As illustrated in Fig. 2, a base portion 11 formed using an insulation material is provided in a display region 10a on the circuit board 10. Provided are a first concave portion 90 recessed from a surface 11u of a side contacting the dispersion liquid (electrophoretic layer) 60 of the base portion 11 to the circuit board 10 and a second concave portion 91 whose surface 11u is recessed such that it has a shallower depth than that of the first concave portion 90. A first electrode 19a is provided in a bottom of the first concave portion 90, namely, actually on the circuit board 10 and the second electrode 19b is provided in a bottom of the second concave portion 91. Although not shown in Fig. 2, the first electrode 19a and the second electrode 19b are electrically connected with each other, and a pixel electrode 19 is configured by the first electrode 19a and the second electrode 19b.

Meanwhile, a white reflection plate 13 is provided on a surface 11u except for the first concave portion 90 and the second concave 91 of the base portion 11. For example, the reflection plate 13 is made from a resin in which white pigment (e.g. titania) is dispersed.

A height of the base portion 11 (except for reflection plate 13) on the circuit board 10, for example, is about 15 µm. A distance between the reflection plate 13 and the opposite electrode 21, namely, a main thickness of the electrophoretic layer 60 is, for example, 20 µm to 30 µm. In other words, a movable range of the electrophoretic particles is less than or equal to 50 µm.

In the electrophoretic display 1 having a configuration mentioned above a voltage is applied between a pixel electrode 19 and an opposite electrode 21 to either draw black particles 61 dispersed in the dispersion liquid 60 to a pixel electrode 19 side, thereby holding the black particles 61 at an aperture of the first concave portion 90 or the second concave portion 91 or draw the black particles 61 to the opposite electrode 21 side, thereby performing black/white display on the display region 10a. A detailed description thereof will be given later.

Next, arrangement of the first concave portion 90 having the first electrode 19a or the second concave portion 91 having the second electrode 19b will be described using Examples.

### Example 1

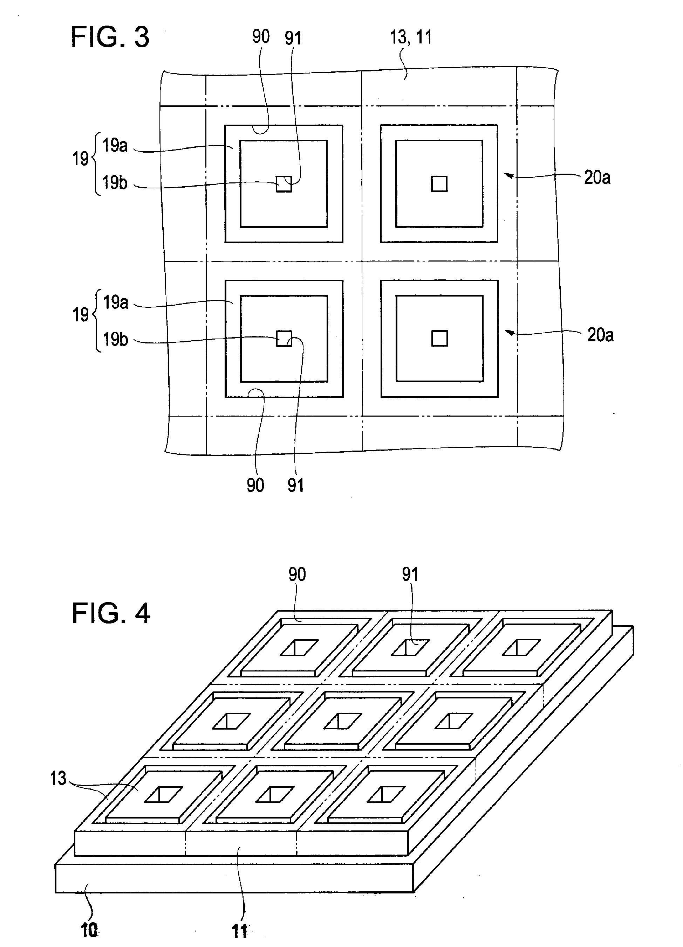

Fig. 3 is a schematic plan view illustrating arrangement of each configuration in a pixel of an Example 1, and Fig. 4 is a schematic perspective view illustrating a configuration of a base portion of the Example 1.

As shown in Fig. 3, a second concave portion 91 of a tetragon (square) is arranged in a nearly center part of a pixel 20a in a planar fashion. A first concave portion 90 having a greater depth than that of the second concave 91 is arranged to surround the second concave portion 91, spaced apart from the second concave portion 90. An outer shape of the first concave portion 90 is also a tetragon (square).

The first concave portion 90 is about 5 µm in width, and is about 15 µm in depth corresponding to the height of the base portion 11. In the meantime, the second concave portion 91 is about 5 µm in width (length of a side of square) and is about 5 µm in depth, which is less than that of the first concave portion 90.

As shown in Fig. 3 and Fig. 4, pixels 20a each having the first concave portion 90 and the second concave portion 91 are arranged on the circuit board 10 in a matrix pattern. A reflection plate 13 provided on the base portion 11 is disposed between first electrodes 19a (first concave portions 90) of adjacent pixels 20a and between a first electrode 19a (first concave portion 90) and a second electrode 19b (second concave portion 91) in each pixel 20a.

Further, in Fig. 3 and Fig. 4, arrangements of the first concave portion 90 and the second concave portion 91 having different depths may be reversed. That is, a first concave portion 90 may be disposed at a center side of the pixel 20a and the second concave portion 91 may be arranged to surround the first concave portion 90.

As illustrated previously, according to the arrangement of the first electrode 19a (first concave portion 90) or the second electrode 19b (second concave portion 91), black particles 61 as electrophoretic particles may be evenly received at an aperture of the first concave portion 90 or the second concave portion 91 or the received black particles 61 may be evenly discharged to the dispersion liquid 60 in the same manner.

### Example 2

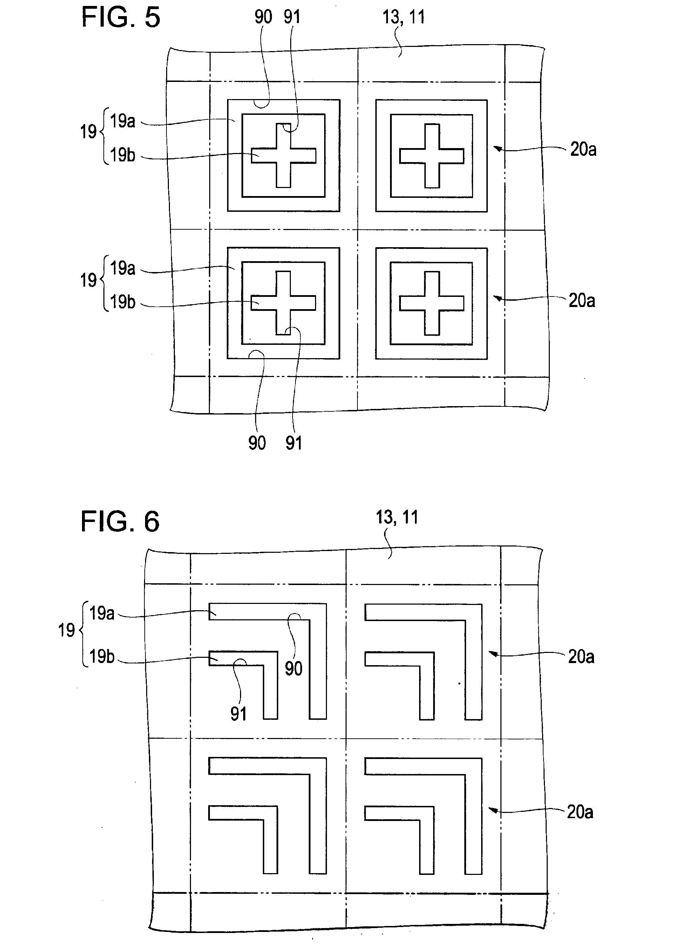

Fig. 5 is a schematic plan view illustrating arrangement of each configuration in a pixel according to an Example 2. As shown in Fig. 5, there is a difference in a planar shape of a second concave portion 91 in the configuration of a pixel 20a of the Example 2 from the Example 1. Specifically, the second concave portion 91 has a'+' (plus) shape. The second concave portion 91 is about 5 µm in width and in depth identical with those of the Example 1. According to this, a volume of an aperture of the second concave portion 91 formed on the base portion 11 may be increased in comparison with the Example 1. That is, the black particles 61 may be rapidly received in the second concave portion 91 or the received black particles 61 may be discharged to the dispersion liquid 60 equally and rapidly. That is, response speed on an outer appearance may be increased in comparison with the Example 1.

As in the Example 1, the arrangements of the first concave portion 90 and the second concave portion 91 having different depths may be exchanged with each other. That is, a first concave portion 90 of a '+' (plus) shape may be disposed at a center side of the pixel 20a and the second concave portion 91 may be arranged to surround the first concave portion 90.

### Example 3

Fig. 6 is a schematic plan view illustrating arrangement of each configuration in a pixel according to an Example 3. Arrangements of a first electrode 19a (first concave portion 90) and a second electrode 19b (second concave portion 91) are not limited to a case where one electrode surrounds another electrode as in the Example 1 or 2. For example, as shown in Fig. 6, in Example 3, a first concave portion 90 (first electrode 19a)is provided perpendicularly bent along and adjacent to two sides of each of a plurality of pixels 20a, which are arranged in a matrix pattern, and a second concave portion 91 (second electrode 19b) is provided to be similarly and perpendicularly bent at an inner side in comparison with the first concave portion 90 and to be spaced apart from the first concave portion 90 (first electrode 19a) by a predetermined distance.

In the arrangement of Example 3, in a pixel 20a, a planar distance between the first concave portion 90 (first electrode 19a) and the second concave portion 91 (second electrode 19b) is constant, and a part may be provided in adjacent pixels 20a in which a planar distance between the first concave portion 90 (first electrode 19a) and the second concave portion 91 (second electrode 19b) is constant. That is, the black particles 61 may be received at an aperture between the first concave portion 90 and the second concave portion 91 to easily perform white display, and the received black particles 61 may be discharged and drawn to the opposite electrode 21 side to perform black display.

Further, in Example 3, in the same manner as in the Example 1, the arrangements of the first concave portion 90 and the second concave portion 91 having different depths may be exchanged with each other. That is, a second concave portion 91 may be provided at a location along adjacent sides of the pixel 20a, and thus a first concave portion 90 may be arranged at an inner side of the second concave portion 91.

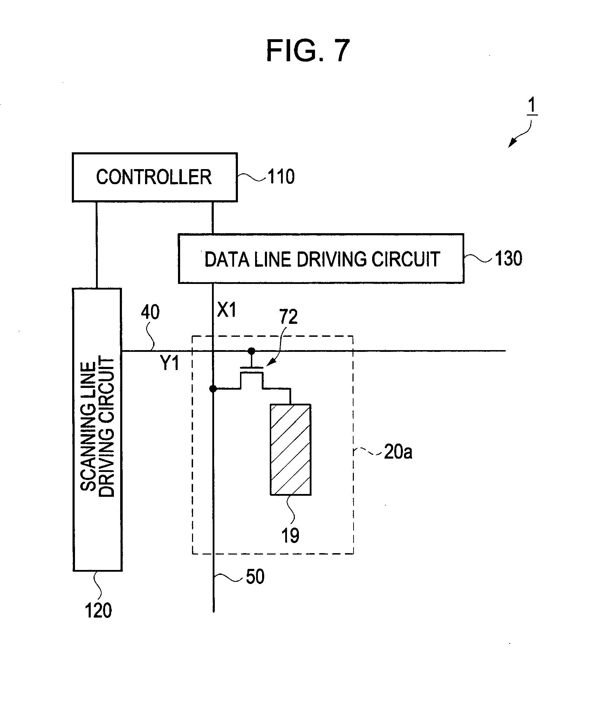

Hereinafter, an electric configuration of an electrophoretic display according to this embodiment will be described with reference to Fig. 7.

As shown in Fig. 7, the electrophoretic display 1 includes a controller 110, a scanning line driving circuit 120, and a data line driving circuit 130. Moreover, the controller 110, the scanning line driving circuit 120, and the data line driving circuit 130 construct a driver according to the aspect of the invention. The controller 110, the scanning line driving circuit 120, and the data line driving circuit 130 are provided around a display region 10a on the circuit board 10. m scan lines 40 (namely, scan lines Y1, Y2,..., Ym) and n data lines 50 (X1, X2,..., Xn) are provided intersecting each other on the display region 10a on the circuit board 10. Specifically, the m scan lines 40 extend in rows (namely, X direction) and the n data lines 50 extend in columns (namely, Y direction). Pixels 20a are arranged corresponding to the intersections between the m scan lines 40 and the n data lines 50.

The controller 110 controls operations of the scanning line driving circuit 120 and the data line driving circuit 130. Specifically, for example, the controller 110 supplies a timing signal such as a clock signal or a start pulse to respective circuits or supplies an image signal based on image information to the pixel electrode 19.

The scanning line driving circuit 120 sequentially supplies a scan signal to the scan lines 40 (Y1, Y2,..., Ym) in a pulse form based on the timing signal provided from the controller 110.

The data line driving circuit 130 supplies an image signal to the data lines 50 (X1, X2,..., Xn) based on the timing signal provided from the controller 110. The image signal is at a binary level composed of high electric potential level (referred to as "high level" hereinafter, e.g., +15V) or low electric potential level (referred to as "low level" hereinafter, e.g., -15V).

The foregoing pixel electrode 19 and a transistor 72 are provided in the pixel 20a. A gate of the transistor 72 is electrically connected to the scan lines 40, a source thereof is electrically connected to the data lines 50, and a drain thereof is electrically connected to the pixel electrode 19. During an operation of the electrophoretic display 1, a scan signal is supplied from the scanning line driving circuit 120 to the scan lines 40 to turn-on the transistor 72, and the pixel electrode 19 and the data lines 50 are electrically connected to each other. According to this, an image signal is supplied from the data lines 50 to the pixel electrode 19.

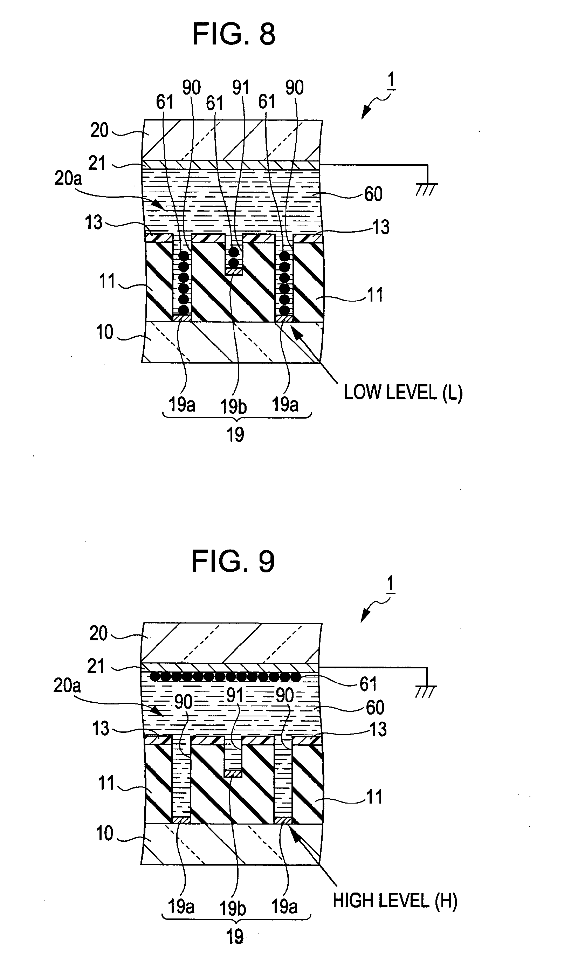

Hereinafter, a display principle of an electrophoretic display according to this embodiment will be described with reference to Fig. 8 and Fig. 9.

Fig. 8 is a schematic cross-sectional view illustrating an arrangement of respective electric potentials of a pixel electrode 19 and an opposite electrode 21 and arrangement of black particles 61 in a pattern fashion when an electrophoretic display 1 displays white on respective pixels 20a. Fig. 9 is a schematic cross-sectional view illustrating respective electric potentials of a pixel electrode 19 and an opposite electrode 21 and arrangement of black particles 61 in a pattern fashion when an electrophoretic display 1 displays black on respective pixels 20a. Further, a configuration of a pixel 20a of the Example 1 will be described by way of example.

As illustrated in Fig. 8, an electric potential level of the opposite electrode 21 is fixed, for example, at level 0 (GND level). If an image signal of low level (L) is supplied to a first electrode 19a of a pixel electrode 19, a plurality of black particles 61 normally charged is moved to a first electrode 19a side and received in the first concave portion 90 by an electric force (coulomb force) caused from the electric field between a first electrode 19a of the pixel electrode 19 and the opposite electrode 21. Accordingly, most or all of the black particles 61 overlapping the reflection plate 13 are absent when viewed in a plan view on the circuit board 10 (refer to Fig. 1 and Fig. 2), and light may be surely reflected from the reflection plate 13. As a result, white may be displayed on each pixel 20a.

Meanwhile, as shown in Fig. 9, if a signal of high level (H) is supplied to the first electrode 19a of the pixel electrode 19, a plurality of black particles 61 normally discharged are moved to the opposite electrode 21 side by an electric force due to the electric field between the first electrode 19a and the opposite electrode 21, and arranged on the opposite substrate 20, and incident light is absorbed by the black particles 61. Accordingly, black may be displayed.

Further, although the first electrode 19a of the pixel electrode 19 is described, a second electrode 19b of the pixel electrode 19 may be controlled in the same manner as the first electrode 19a. By performing the same control, when performing white display, the black particles 61 may be all received in the first concave portion 90 and/or the second concave portion 91 such that white display of high quality can be performed.

In the meantime, a case where the second electrode 19b is controlled in a different manner from that of the first electrode 19a may be considered. For example, an electric potential having the same polarity as that of the first electrode 19a may be delayed and applied to the second electrode 19b. By this control, for example, when an electric potential is initially applied to the first electrode 19a, a part of the black particles 61 is received in the first concave portion 90. When the electric potential is next applied to the second electrode 19b, the remaining black particles 61 may be received in the second concave portion 91. In particular, a volume of the first concave portion 90 is designed to be larger than that of the second concave portion 91, thereby performing initial reception at high speed and increasing visibility.

Further, the second electrode 19b is formed in a second concave portion 91 of the base portion 11, and is closer to the opposite electrode 21 in comparison with the first electrode 19a. Accordingly, the black particles 61 may be received in the second concave portion 91 reliably in comparison with a case where the second electrode 19b is formed on the circuit board 10. Therefore, it has effect in that white display may be more rapidly and clearly performed in comparison with a case where only the first concave portion 90 is provided.

In this embodiment, since only one type of electrophoretic particle, namely a black particle 61 type, is dispersed in the dispersion liquid 60, a concentration of particles in the dispersion liquid 60 may be reduced in comparison with a case where black particles 61 and white particles are dispersed in the dispersion liquid 60, and moving speed of the black particles 61 in the dispersion liquid 60 (in other words, response speed of a black particle 61 to a voltage applied between the first electrode 19a and the opposite electrode 21) may be increased. As a result, display speed switching display may be increased.

In addition, in this embodiment, since light is reflected from the reflection plate 13 to display white, the white may be clearly displayed on the display region 10a. Here, although the black particles 61 are received in the first concave portion 90 and the second concave portion 91 between adjacent pixels 20a, since the first concave portion 90 and the second concave portion 91 are about 5 µm in width, the reflection plate 13 scatters the light in a plurality of directions such that it is difficult to recognize presence of the first concave portion 90 and the second concave portion 91. This does not adversely affect (e.g., brightness or deterioration in contrast) display of a color (namely, black) of the black particles 61 received in an aperture between the first concave portion 90 and the second concave portion 91 substantially or at all.

As illustrated above, if considering influence in display of the black particles 61 received in an aperture between the first concave portion 90 and the second concave portion 91, the first concave portion 90 and the second concave portion 91 are preferably less than or equal to 5 µm in width.

In this embodiment, in particular, widths or depths of the first concave portion 90 and the second concave portion 91 are adjusted such that a total volume of black particles 61 corresponding to each pixel 20a is smaller than that of the first concave portion 90 and the second concave portion 91. Accordingly, a case where a plurality of black particles 61 cannot be received can be avoided when displaying white in each pixel 20a. That is, a plurality of black particles 61 may be certainly received, and white display may be clearly performed.

As illustrated previously, in an electrophoretic display 1 according to this embodiment, high-quality display may be performed.

### Second embodiment

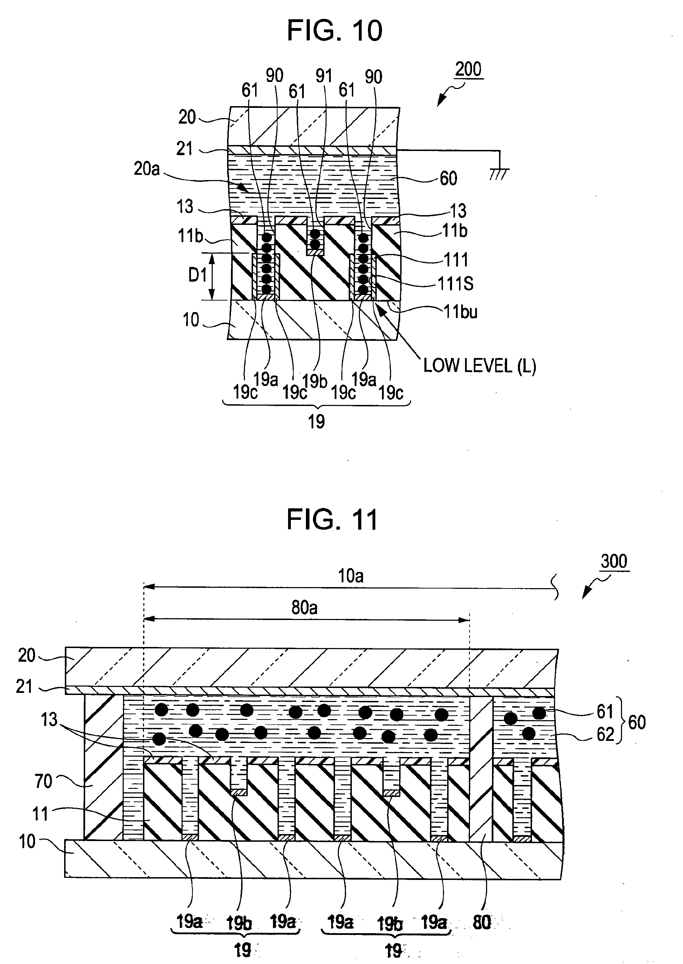

An electrophoretic display according to a second embodiment of the present invention will be explained with reference to Fig. 10.

Fig. 10 is a view illustrating a configuration of a pixel in an electrophoretic display according to a second embodiment. The same reference numerals in Fig. 10 are used as throughout the drawings to refer to the same or like parts in the first embodiment, and thus a description thereof is appropriately omitted.

In Fig. 10, an electrophoretic display 200 according to the second embodiment has a side portion 19c of the first electrode 19a besides the first electrode 19a of the pixel electrode 19. Except for the foregoing point, a construction of the second embodiment is substantially the same as that of the electrophoretic display 1 according to the first embodiment.

As illustrated in Fig. 10, the base portion 11 b has a cut portion 111 formed in which a part of a side of a first concave portion 90 of a corresponding base portion 11 b is cut. The cut portion 111 is cut from a lower surface 11 bu of the base portion 11 b towards an upper side (dispersion liquid 60 side or opposite substrate 20 side) of the first concave portion 90 by a length D1. Besides the first electrode 19a, the cut portion 111 has the side portion 19c which is an electrode provided along a side 111S in the cut portion 111 of the base portion 11b. A reflection plate 13 is provided on the base portion 11b. Fig. 10 illustrates that a plurality of black particles 61 are received in the first concave portion 90 and the second concave portion 91 as a signal of low level (L) is supplied to the first electrode 19a, a second electrode 19b, and a side portion 19c of the first electrode 19a.

In the electrophoretic display 200 according to the second embodiment constructed as shown, since a side portion 19c of the first electrode 19a is provided besides the first electrode 19a inside the first concave portion 90, the first electrode 19a and the side portion 19c of the first electrode 19a may draw the black particles 61 dispersed in the dispersion liquid 60 rapidly and certainly.

As a result, in the electrophoretic display 200 according to the second embodiment, higher quality display may be performed.

### Third embodiment

An electrophoretic display according to a third embodiment of the present invention will be explained with reference to Fig. 11.

Fig. 11 is a cross-sectional view illustrating a configuration of an electrophoretic display according to a third embodiment. The same reference numerals in Fig. 11 are used as throughout the drawings to refer to the same or like parts in the first embodiment, and thus a description thereof is appropriately omitted.

In Fig. 11, an electrophoretic display 300 according to the third embodiment has a partition 80. Except for the foregoing point, a construction of the third embodiment is substantially the same as that of the electrophoretic display 1 according to the first embodiment.

As illustrated in Fig. 11, the partition 80 is provided between a circuit board 10 and an opposite substrate 20 to compartmentalise a display region 10a (in other words, electrophoretic layer 60) into a plurality of regions 80a. For example, the partition 80 has reticular pattern when viewed in plan.

In the this embodiment, since the partition 80 is provided between the circuit board 10 and the opposite substrate 20, for example, strength of pressure applied to the circuit board 10 side or the opposite substrate 20 side may be increased.

Here, in this embodiment, particularly, a plurality of pixel electrodes 19 are included in each of a plurality of regions 80a formed by the partition 80 (in other words, a plurality of pixels 20a are included). Since a region of the display region 10a in which the partition 80 is arranged (in other words, region not contributing to display) is shallower than the corresponding region in the first embodiment, where the partition 80 is not provided, bright and high contrast display may be performed.

### Electronic device

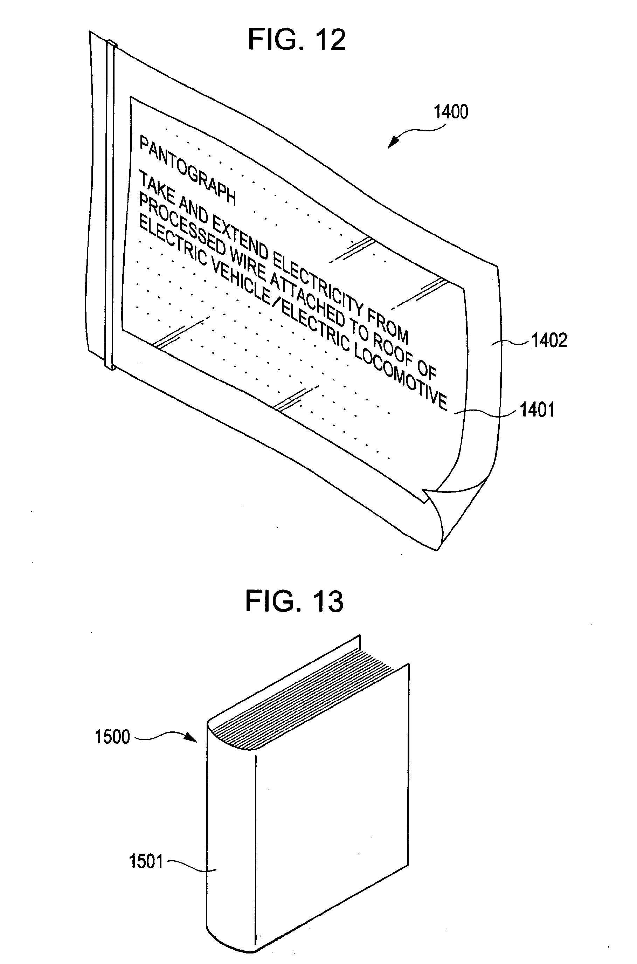

Next, an electronic device to which the foregoing electrophoretic display is applied will be described with reference to Fig. 12 and Fig. 13. Hereinafter, a case where the electrophoretic display is applied to an electronic paper and an electronic notebook will be explained by way of example.

Fig. 12 is a perspective view illustrating a configuration of an electronic paper as an electronic device.

As illustrated in Fig. 12, the electronic paper 1400 has the electrophoretic display according to the foregoing embodiment as a display unit 1401. The electronic paper 1400 has flexibility, and includes a body 1402 configured by a rewritable sheet having the same bendability and texture as those of the related art.

Fig. 13 is a perspective view illustrating a configuration of an electronic notebook as an electronic device.

As illustrated in Fig. 13, the electronic notebook 1500 is configured by tying a plurality of electronic papers 1400 shown in Fig. 12 and inserting the tied electronic papers 1400 in a cover 1501. The cover 1501 has a display data input means (not shown) for receiving input of display data provided from, for example, an external device. According to this, according to the display data, in a state that the electronic papers 1400 are tied, display content may be changed or updated.

Since the foregoing electronic paper 1400 and electronic notebook 1500 have the electrophoretic display according to the foregoing embodiment, high-quality images may be displayed.

Here, the embodiments of the present disclosure are not limited to the first to third embodiments described above, and various modifications are possible within a scope of the present disclosure. An electrophoretic display involving such modifications and an electronic device with the same may be included in a technical scope of the invention.

For example, in the first embodiment, a planar shape of the pixel 20a, in other words, a planar shape of the first concave portion 90 (first electrode 19a) or the second concave portion 91 (second electrode 19b) is not limited to a square. The planar shape of the pixel 20a may be a polygon or circle.

## Claims

1. An electrophoretic display (1) comprising:
a first substrate (10) and a second substrate (20) facing each other;
a base portion (11) provided on the second substrate side of the first substrate;
a first concave portion (90) and a second concave portion (91) provided such that a surface of the second substrate side of the base portion is recessed, and the second concave portion (91) having a shallower depth than the first concave portion;
a first electrode (19a) provided on a bottom surface of the first concave portion;
a second electrode (19b) provided on a bottom surface of the second concave portion;
a third electrode (21) provided on the first substrate side of the second substrate;
a dispersion liquid (60) filled between the first substrate and the second substrate, in which electrophoretic particles (61) having a different color from that of a reflection plate are dispersed in a dispersing medium (62); and **characterized in that**
the reflection plate (13) is provided on the surface of the second substrate side of the base portion (11) except for the first concave portion and the second concave portion;
and that the first electrode (19a) and the second electrode (19b) are electrically connected to each other.

2. The electrophoretic display according to claim 1, wherein the first electrode includes a side surface portion (111) extending towards the second substrate side along a side surface of the first concave portion.

3. The electrophoretic display according to claim 1 or claim 2, wherein the first concave portion (90) surrounds and is spaced apart from the second concave portion (91) in plan view.

4. The electrophoretic display according to claim 1 or claim 2, wherein the second concave portion (91) surrounds and is spaced apart from the first concave portion (90) in plan view.

5. The electrophoretic display according to any one of the preceding claims,
wherein the first concave portion (90) and the second concave portion (91) are spaced apart by a constant distance in plan view.

6. The electrophoretic display according to any one of the preceding claims,
wherein the total volume of the electrophoretic particles (61) in the dispersion liquid (62) is smaller than the total volume of the first concave portion (90) and the second concave portion (91) provided in the base portion.

7. The electrophoretic display according to any of the preceding claims, further comprising:
a partition (80) compartmenting an electrophoretic layer including the dispersion liquid (60) filled between the first substrate (10) and the second substrate (20) into a plurality of regions (80a),
wherein one or both of the first electrode (19a) and the second electrode (19b) are provided for each of the plurality of regions.

8. An electronic device comprising the electrophoretic display according to any of the preceding claims.

## Patentansprüche

1. Elektrophoretische Anzeige (1), umfassend:
ein erstes Substrat (10) und ein zweites Substrat (20), die einander zugewandt sind;
einen Basisabschnitt (11), der an der zweiten Substratseite des ersten Substrats bereitgestellt ist;
einen ersten konkaven Abschnitt (90) und einen zweiten konkaven Abschnitt (91), die derart bereitgestellt sind, dass eine Oberfläche der zweiten Substratseite des Basisabschnitts vertieft ist, und wobei der zweite konkave Abschnitt (91) eine geringere Tiefe als der erste konkave Abschnitt (90) aufweist;
eine erste Elektrode (19a), die an einer Bodenfläche des ersten konkaven Abschnitts bereitgestellt ist;
eine zweite Elektrode (19b), die an einer Bodenfläche des zweiten konkaven Abschnitts bereitgestellt ist;
eine dritte Elektrode (21), die an der ersten Substratseite des zweiten Substrats bereitgestellt ist;
eine Dispersionsflüssigkeit (60), die zwischen dem ersten Substrat und dem zweiten Substrat eingefüllt ist, in der elektrophoretische Partikel (61) mit einer anderen Farbe als jener einer Reflexionsplatte in einem Dispergiermedium (62) dispergiert sind; und **dadurch gekennzeichnet, dass**
die Reflexionsplatte (13) an der Oberfläche der zweiten Substratseite des Basisabschnitts (11) bereitgestellt ist, mit Ausnahme des ersten konkaven Abschnitts und des zweiten konkaven Abschnitts;
und dass die erste Elektrode (19a) und die zweite Elektrode (19b) elektrisch miteinander verbunden sind.

2. Elektrophoretische Anzeige nach Anspruch 1, wobei die erste Elektrode einen Seitenflächenabschnitt (111) enthält, der sich zur zweiten Substratseite entlang einer Seitenfläche des ersten konkaven Abschnitts erstreckt.

3. Elektrophoretische Anzeige nach Anspruch 1 oder Anspruch 2, wobei der erste konkave Abschnitt (90) den zweiten konkaven Abschnitt (91) in Draufsicht umgibt und von diesem beabstandet ist.

4. Elektrophoretische Anzeige nach Anspruch 1 oder Anspruch 2, wobei der zweite konkave Abschnitt (91) den ersten konkaven Abschnitt (90) in Draufsicht umgibt und von diesem beabstandet ist.

5. Elektrophoretische Anzeige nach einem der vorangehenden Ansprüche, wobei der erste konkave Abschnitt (90) und der zweite konkave Abschnitt (91) in Draufsicht mit konstantem Abstand beabstandet sind.

6. Elektrophoretische Anzeige nach einem der vorangehenden Ansprüche, wobei das Gesamtvolumen der elektrophoretischen Partikel (61) in der Dispersionsflüssigkeit (62) kleiner ist als das Gesamtvolumen des ersten konkaven Abschnitts (90) und des zweiten konkaven Abschnitts (91), die im Basisabschnitt bereitgestellt sind.

7. Elektrophoretische Anzeige nach einem der vorangehenden Ansprüche, des Weiteren umfassend:
eine Trennwand (80), die eine elektrophoretische Schicht, die die Dispersionsflüssigkeit (60) enthält, die zwischen dem ersten Substrat (10) und dem zweiten Substrat (20) eingefüllt ist, in mehrere Regionen (80a) unterteilt,
wobei eine oder beide von der ersten Elektrode (19a) und der zweiten Elektrode (19b) für jede der mehreren Regionen vorgesehen sind.

8. Elektronische Vorrichtung, die die elektrophoretische Anzeige nach einem der vorangehenden Ansprüche umfasst.

## Revendications

1. Afficheur électrophorétique (1) comprenant :
un premier substrat (10) et un second substrat (20) se faisant face l'un l'autre ;
une partie de base (11) fournie du côté du second substrat du premier substrat ;
une première partie concave (90) et une seconde partie concave (91) fournies de manière à ce qu'une surface du côté du second substrat de la partie de base soit creuse, et la seconde partie concave (91) ayant une profondeur plus faible que la première partie concave ;
une première électrode (19a) fournie sur une surface du fond de la première partie concave ;
une deuxième électrode (19b) fournie sur une surface du fond de la seconde partie concave ;
une troisième électrode (21) fournie du côté du premier substrat du second substrat ;
un liquide de dispersion (60) rempli entre le premier substrat et le second substrat, dans lequel des particules électrophorétiques (61) ayant une couleur différente de celle d'une plaque réfléchissante sont dispersées dans un milieu de dispersion (62) ; et **caractérisé en ce que**
la plaque réfléchissante (13) est fournie sur la surface du côté du second substrat de la partie de base (11) à l'exception de la première partie concave et de la seconde partie concave ;
et **en ce que** la première électrode (19a) et la seconde électrode (19b) sont connectées électriquement l'une à l'autre.

2. Afficheur électrophorétique selon la revendication 1, dans lequel la première électrode comprend une partie de surface latérale (111) s'étendant vers le côté du second substrat le long d'une surface latérale de la première partie concave.

3. Afficheur électrophorétique selon la revendication 1 ou la revendication 2, dans lequel la première partie concave (90) entoure la seconde partie concave (91) en étant espacée de celle-ci en vue en plan.

4. Afficheur électrophorétique selon la revendication 1 ou la revendication 2, dans lequel la seconde partie concave (91) entoure la première partie concave (90) en étant espacée de celle-ci en vue en plan.

5. Afficheur électrophorétique selon l'une quelconque des revendications précédentes, dans lequel la première partie concave (90) et la seconde partie concave (91) sont espacées d'une distante constante en vue en plan.

6. Afficheur électrophorétique selon l'une quelconque des revendications précédentes, dans lequel le volume total des particules électrophorétiques (61) dans le liquide de dispersion (62) est plus faible que le volume total de la première partie concave (90) et de la seconde partie concave (91) fournies dans la partie de base.

7. Afficheur électrophorétique selon l'une quelconque des revendications précédentes, comprenant par ailleurs :
une séparation (80) compartimentant une couche électrophorétique comprenant le liquide de dispersion (60) rempli entre le premier substrat (10) et le second substrat (20) en une pluralité de zones (80a),
dans lequel l'une parmi la première électrode (19a) et la seconde électrode (19b) ou les deux d'entre elles est/sont fournie(s) pour chacune de la pluralité de zones.

8. Dispositif électronique comprenant l'afficheur électrophorétique selon l'une quelconque des revendications précédentes.
